# EUROPEAN PATENT APPLICATION

(11) **EP 4 102 443 A1**
(43) Date of publication of application: **14.12.2022**
(21) Application number: 20917485.3
(22) Date of filing: 02.10.2020
(51) Int. Cl.: G06Q 50/04

(54) **MANUFACTURING ORDER PLACEMENT SUPPORT DEVICE, METHOD, AND PROGRAM**

(30) Priority: 07.02.2020 JP 2020020017
(71) Applicant: NTT Communications Corporation, Tokyo 100-8019 (JP)
(72) Inventor: AKABORI, Hideaki, Tokyo 100-8019 (JP); KITA, Yujiro, Tokyo 100-8019 (JP); YAMAKAWA, Kazuhiro, Tokyo 100-8019 (JP)
(74) Representative: Gramm, Lins & Partner Patent- und Rechtsanwälte PartGmbB
(86) International application number: PCT/JP2020/037569
(87) International publication number: WO 2021/157130

(57) **Abstract**

In a server device SV, component parts are recognized from an assembly drawing of a product included in design information sent from a product manufacturer (set manufacturer) to generate a parts list, further based on this parts list, the product manufacturer is requested to provide the contents of instruction required for manufacturing the component parts and specification information, and these are acquired to generate a manufacturing instruction. Furthermore, based on the generated manufacturing instruction, the component parts are classified into sets of ones that are the same or similar within a predetermined range in conditions of the material, the outer shape and dimensions, and the processing method to form order groups, and bidding matter information is disclosed on an order group-by-order group basis.

## Description

### FIELD

Embodiments of the present invention relate to manufacturing ordering assistance apparatus, method and program for assisting in operations, for example, of a product manufacturer, to place an order for parts or the like.

### BACKGROUND

For example, when a manufacturer manufactures an industrial product, in general, a designer creates design drawings of the product and the parts used for the product on a design system using computer-aided design (CAD) or the like, and based on the created design drawings, manually creates, as separate documents, a parts list and a manufacturing instruction including the detailed specification information required for manufacturing the parts and the contents of manufacturing instruction. Then, based on the created parts list and manufacturing instruction, a person in charge of procurement selects, for each part, a processor to place an order for manufacturing the part (for example, refer to Patent Literature 1).

### CITATION LIST

### PATENT LITERATURE

Patent Literature 1: Jpn. Pat. Appln. KOKAI Publication No. 2002-189758

### SUMMARY

### TECHNICAL PROBLEM

Therefore, it has taken much labor and time until parts procurement, which has caused a high load on the designer and the person in charge of procurement at the manufacturer. Moreover, there occasionally occurs a design change at the manufacturing site in general even after the design completes, and every time in such a case, the designer has to change the parts list and the manufacturing instruction. This has led to a high human load on the manufacturer regarding the parts procurement, which has caused efficiency of the parts procurement to decrease.

An object of the present invention, which has been conceived in consideration of the aforementioned circumstances, is to provide a technology of making parts procurement efficient to reduce a load on the order placement side regarding the parts procurement and enabling the manufacturing quality of parts to be uniform.

### SOLUTION TO PROBLEM

In order to solve the aforementioned problem, there is provided a manufacturing ordering assistance apparatus or method according to an aspect of the present invention, comprising: acquiring design information of a product from a terminal device used by a product manufacturer; recognizing a plurality of parts forming the product from the acquired design information and generating parts list information representing the recognized parts; and acquiring information required for manufacturing the recognized parts from the terminal device, based on this parts list information and generating manufacturing instruction information at least including the acquired information required for manufacturing. It further comprises classifying the recognized parts into a plurality of order groups in each of which a condition regarding the manufacturing is common within a predetermined range, based on the generated manufacturing instruction information.

### ADVANTAGEOUS EFFECTS OF INVENTION

According to an aspect of the present invention, in the manufacturing ordering assistance apparatus, the parts list information representing the plurality of parts forming the product is automatically generated based on the design information of the product sent from a product manufacturer, and the manufacturing instruction information is automatically generated based on the aforementioned information required for manufacturing the parts likewise sent from the above. Therefore, the product manufacturer does not need to generate the parts list information or the manufacturing instruction information, which can significantly reduce a load regarding the parts procurement operation. Furthermore, based on the generated manufacturing instruction information mentioned above, the plurality of parts mentioned above are classified into the plurality of groups in each of which the condition regarding the manufacturing is common within a predetermined range. Therefore, order placement for the aforementioned parts can be performed for each group in which the condition regarding the manufacturing is common within a predetermined range, which can make the parts order placement operation more efficient and the manufacturing quality of the parts more uniform, for example, as compared with the case of order placement for each part.

Namely, according to an aspect of the present invention, there can be provided a technology of reducing a load on the manufacturer side regarding a parts procurement operation to make parts procurement efficient and enabling a parts order placement operation to be efficient and manufacturing quality to be uniform.

### BRIEF DESCRIPTION OF THE DRAWINGS

FIG. 1 is a diagram showing an overall configuration of a system including a manufacturing ordering assistance apparatus according to an embodiment of the present invention.
FIG. 2 is a block diagram showing a hardware configuration of the manufacturing ordering assistance apparatus according to an embodiment of the present invention.
FIG. 3 is a block diagram showing a software configuration of the manufacturing ordering assistance apparatus according to an embodiment of the present invention.
FIG. 4 is a flowchart showing the summary of the overall processing procedures and processing contents of manufacturing ordering assistance processing by the manufacturing ordering assistance apparatus shown in FIG. 3.
FIG. 5 is a flowchart showing processing procedures and processing contents of registration of information required for placing an order and disclosure processing of bidding matters in the manufacturing ordering assistance processing shown in FIG. 4.
FIG. 6 is a diagram showing exemplary operations from acquisition of design information to grouping of ordered parts in the registration of information required for order placement and the disclosure processing of bidding matters shown in FIG. 5.

### DETAILED DESCRIPTION

Hereafter, embodiments according to the present invention will be described with reference to the drawings.

### <Embodiment>

### (Configuration Example)

### (1) System

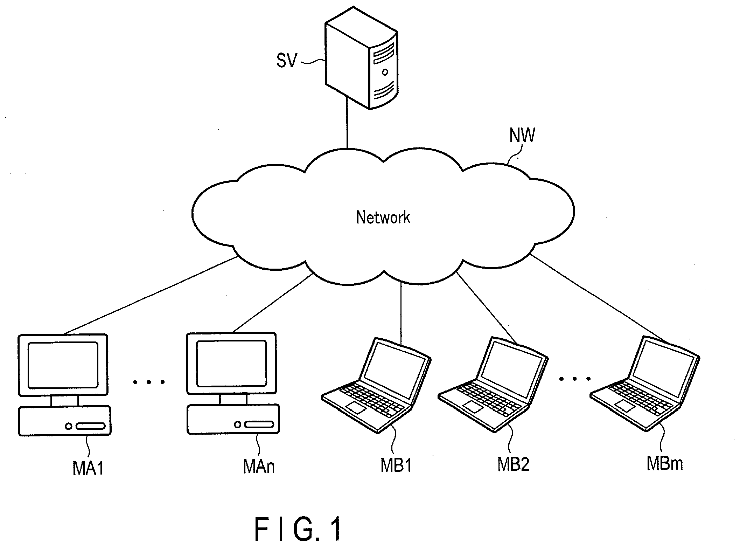

FIG. 1 is a diagram showing a configuration of the overall system including a manufacturing ordering assistance apparatus according to an embodiment of the present invention.

In this example, the system comprises a server computer (hereinafter referred to as server device) SV that operates as the manufacturing ordering assistance apparatus. Further, the server device SV enables data transmission between first terminal devices MA1 to MAn used by respective product manufacturers (also called set manufacturers) and second terminal devices MB1 to MBm used by respective parts manufacturers (also called parts manufacturing agents or processors) via a network NW.

Each of the first terminal devices MA1 to MAn is formed, for example, of a CAD system or a personal computer for order placement management. Each of the first terminal devices MA1 to MAn is mainly used by a person in charge of procurement at a product manufacturer (set manufacturer) and is used for transmitting design information including an assembly drawing of a product created by a person in charge of design and parts manufacturing information required for manufacturing a plurality of parts forming the aforementioned product to the aforementioned server device SV, and for transmitting information regarding order placement for the parts and the similar order placement information to the aforementioned server device SV.

Each of the second terminal devices MB1 to MBm is formed of a personal computer for order reception management, and is used, for example, by a person in charge of sales at a parts manufacturer (processor) for transmitting company information of the parts manufacturer and manufacturing resource information representing a manufacturing capacity thereof to the server device SV, and for browsing bidding matter information disclosed on the server device SV.

Notably, the network NW comprises a wide area network having the Internet as its core and access networks for accessing this wide area network, for example. There are used for the access networks, for example, wired and wireless public networks, wired and wireless local area networks (LANs), and cable television (CATV) networks.

### (2) Apparatus

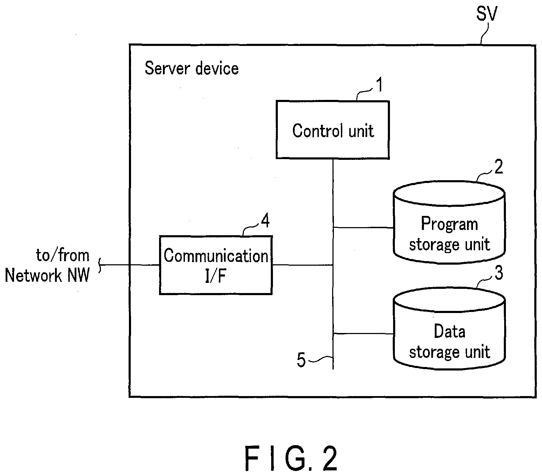

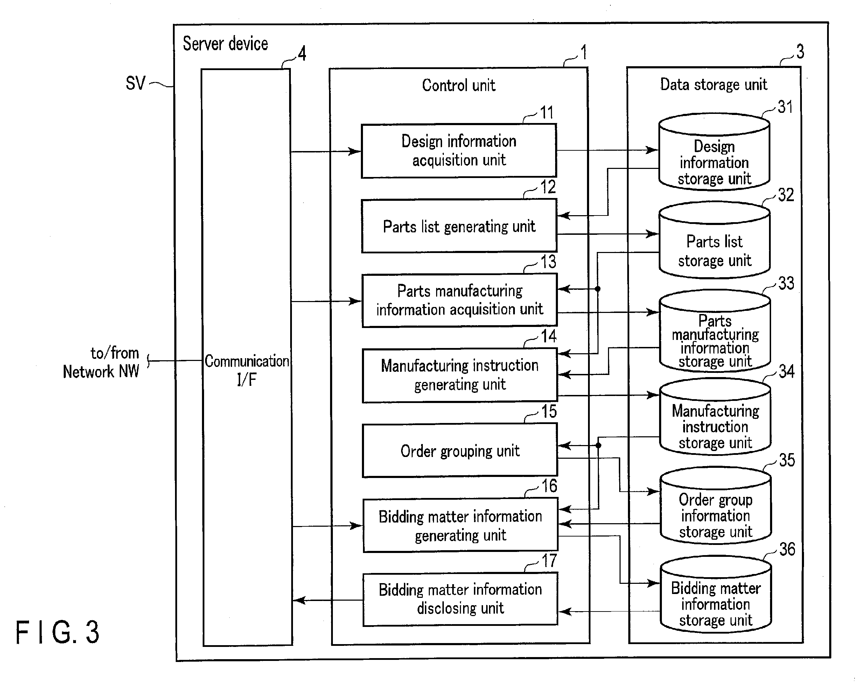

FIG. 2 and FIG. 3 are block diagrams showing a hardware configuration and a software configuration of the server device SV, respectively.

The server device SV comprises a control unit 1 having a hardware processor such as a central processing unit (CPU), and to this control unit 1 via a bus 5, a storage unit having a program storage unit 2 and a data storage unit 3 and a communication interface (communication I/F) 4 are connected.

The communication interface 4 conducts data transmission between the aforementioned first terminal devices MA1 to MAn and second terminal devices MB1 to MBm via the network NW under the control of the control unit 1 and, for example, includes an interface for wired networking.

The program storage unit 2 includes, for example, a combination of a nonvolatile memory upon which writing and reading can be performed at any time, such as a hard disk drive (HDD) or a solid state drive (SSD), and a nonvolatile memory such as a read-only memory (ROM), as a storage medium, and stores, in addition to middleware such as an operating system (OS), program(s) required for executing various kinds of control processing according to an embodiment of the present invention.

The data storage unit 3 includes, for example, a combination of a nonvolatile memory upon which writing and reading can be performed at any time, such as an HDD or an SSD, and a volatile memory such as a random access memory (RAM), as a storage medium, and comprises, as main storage areas required for implementing an embodiment of the present invention, a design information storage unit 31, a parts list storage unit 32, a parts manufacturing information storage unit 33, a manufacturing instruction storage unit 34, an order group information storage unit 35, and a bidding matter information storage unit 36.

The design information storage unit 31 is used for storing design information uploaded from each of the first terminal devices MA1 to MAn of the product manufacturers. The design information includes, for example, data of an assembly drawing created for each product or for each of modules forming the product. The data of the assembly drawing includes, for example, portable document format (PDF) data, two-dimensional (2D) CAD data or three-dimensional (3D) CAD data.

The parts list storage unit 32 is used for storing parts list information which is generated by the control unit 1 mentioned later and represents a list of a plurality of parts forming the aforementioned product, associating it with identification information (product ID) of the product.

The parts manufacturing information storage unit 33 is used for storing information required for manufacturing the parts described in the aforementioned parts list information, associating it with identification information (parts ID) of the parts and the product ID. The information required for manufacturing the parts includes information designating the contents of manufacturing instruction and specifications, and is transmitted from each of the first terminal devices MA1 to MAn of the product manufacturers.

The manufacturing instruction storage unit 34 is used for storing parts manufacturing instruction information including all the items of information required for instructing the parts manufacturer (processor) to manufacture the parts, associating it with the parts ID and the product ID. The parts manufacturing instruction information is generated by the control unit 1 mentioned later.

The order group information storage unit 35 is used for storing information representing a group of ordered parts. This information representing a group of ordered parts is also generated by the control unit 1 mentioned later.

The bidding matter information storage unit 36 is used for storing the bidding matter information including information required for making bidding for the parts on an order group-by-order group basis. This bidding matter information is also generated by the control unit 1 mentioned later.

The control unit 1 comprises, as processing functions according to the embodiment of the present invention, a design information acquisition unit 11, a parts list generating unit 12, a parts manufacturing information acquisition unit 13, a manufacturing instruction generating unit 14, an order grouping unit 15 as a classification unit, a bidding matter information generating unit 16, and a bidding matter information disclosing unit 17. Any of these processing units 11 to 17 are implemented by causing a hardware processor of the control unit 1 to execute a program stored in the program storage unit 2.

The design information acquisition unit 11 receives design information of a product uploaded from each of the first terminal devices MA1 to MAn of the product manufacturers via the communication interface 4. Then, the design information acquisition unit 11 performs processing of storing the received design information mentioned above, associating it with the product ID, in the aforementioned design information storage unit 31. Notably, the design information may be associated with identification information of the product manufacturer (set manufacturer) as a requestor.

The parts list generating unit 12 reads assembly drawing data for each product or for each of the modules forming the product from the aforementioned design information storage unit 31, and recognizes component parts from the assembly drawing data. The recognition of component parts is performed, for example, based on prestored solid shapes and dimensions (sizes) of parts and the like. Then, the parts list generating unit 12 perform processing of generating the parts list information representing a list of parts in which a part name, a parts grouping, a part quantity and a model number (for example, a suffix) are described for each of the recognized parts mentioned above, and storing the generated parts list information, associating it with the identification information of the corresponding product, in the parts list storage unit 32.

The parts manufacturing information acquisition unit 13 transmits a request for requesting providing information required for manufacturing, for each of the parts described in the aforementioned parts list information, to the relevant one of the first terminal devices MA1 to MAn for the product manufacturers as the requestor. Then, the parts manufacturing information acquisition unit 13 performs processing of receiving the information required for manufacturing sent from the relevant one of the first terminal devices MA1 to MAn in response to the aforementioned request and storing the received information required for manufacturing the part, associating it with the identification information of the part, in the parts manufacturing information storage unit 33. The information required for manufacturing the part includes, for example, the contents of manufacturing instruction and specification information. The contents of manufacturing instruction include, for example, information designating a processing method and a processing process. The specification information includes information designating a material, a finishing level, quality and the like.

The manufacturing instruction generating unit 14 describes, in a manufacturing instruction format stored in the data storage unit 3, the contents of manufacturing instruction and the specification information mentioned above stored in the parts manufacturing information storage unit 33 for each part, furthermore, attaches a file of 3D drawing data and 2D drawing data of the part thereto and adds data representing points to be considered relating the processing process thereto thereby to generate manufacturing instruction information for each part. Then, there is performed processing of storing the generated manufacturing instruction information mentioned above, associating it with the part ID and the product ID, in the manufacturing instruction storage unit 34.

The order grouping unit 15 differentiates parts that are the same or similar within a predetermined range in predetermined conditions for determining the degree of similarity between parts, for example, the material, the outer shape and dimensions, and the processing method of the part, based on the aforementioned manufacturing instruction information stored in the manufacturing instruction storage unit 34. Then, for all the parts forming the product, the order grouping unit 15 performs processing of grouping the same or similar ones in the aforementioned conditions on the basis of the aforementioned differentiation results and storing each grouped parts group, associating it with an order group ID, in the order group information storage unit 35.

The bidding matter information generating unit 16 performs processing of generating, on the order group-by-order group basis, the bidding matter information of the parts on the basis of group information of the ordered parts stored in the aforementioned order group information storage unit 35 and storing the generated bidding matter information, associating it with the order group ID, in the bidding matter information storage unit 36. The bidding matter information is generated by extracting information to be disclosed to the parts manufacturers, for example, from the aforementioned manufacturing instruction information stored in the manufacturing instruction storage unit 34 and further adding, to the extracted information mentioned above, the bidding conditions and the order placement information designated by the product manufacturer (set manufacturer). The bidding matter information includes, for example, items of information representing a part name, a parts grouping, a processing method, a material, a desired quantity, a desired manufacturing charge, a desired delivery time, bidding essential conditions and bidding desired conditions.

The bidding matter information disclosing unit 17 performs processing of setting the aforementioned bidding matter information for each order group stored in the bidding matter information storage unit 36 to a disclosable state in response to a browsing request from each of the second terminal devices MB1 to MBm of the parts manufacturers, and downloading it in response to the aforementioned browsing request.

### (Exemplary Operations)

Next, exemplary operations of the server device SV configured as above are described.

### (I) Overall Operation of Manufacturing Ordering Assistance

### Processing

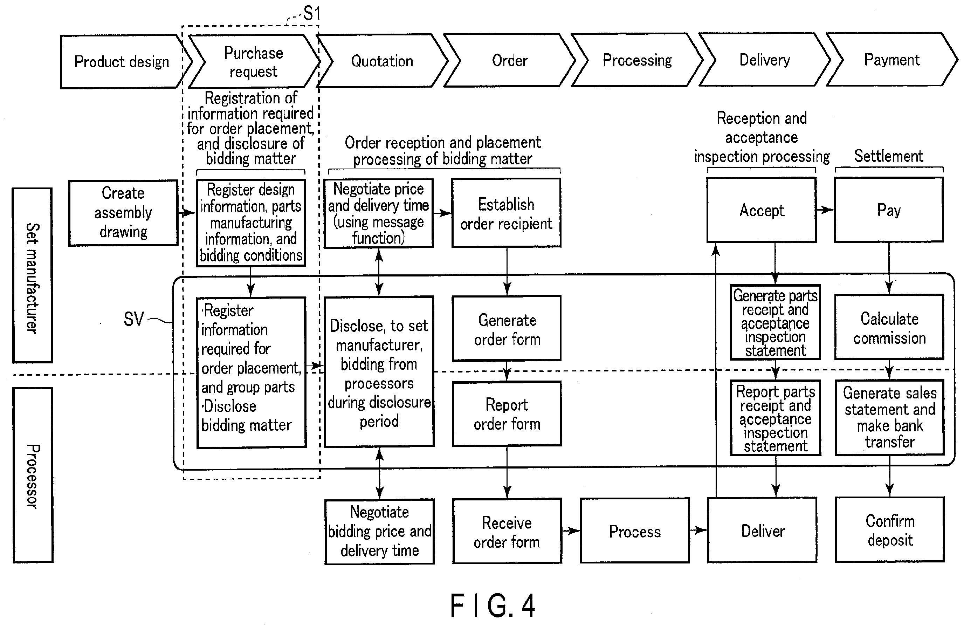

FIG. 4 is a flowchart showing the summary of overall processing procedures and processing contents of manufacturing ordering assistance processing by the server device SV. In the order of product design, a purchase request S1, a quotation, an order, processing, delivery, and payment in time series, the server device SV performs assistance operations for those. Notably, while in this embodiment, there is exemplarily described a case where the server device SV performs assistance operations only for the purchase request, the quotation, the order, the delivery, and the payment, the server device SV may perform assistance operations for the product design and the processing.

In the assistance operation for the purchase request S1, there are performed processing of receiving the design information, the parts manufacturing information, the bidding conditions and the order placement information sent from the first terminal devices MA1 to MAn of the product manufacturers (set manufacturers) to perform unified registration and management of these items of information according to order placement, and based on the aforementioned items of information, processing of generating the bidding matter information to disclose it to the parts manufacturers (processors). In the aforementioned unified registration and management processing on the information, processing of grouping ordered parts is also performed. The unified registration and management of information required for the order placement, and the grouping processing of ordered parts are described in detail using specific examples later.

In the assistance operation for the quotation, there is performed processing for receiving the bidding information from the processors with respect to the aforementioned bidding matter information disclosed to the parts manufacturers (processors) and presenting this bidding information to the product manufacturers (set manufacturers) to mediate between the parts manufacturers (processors) and the product manufacturers (set manufacturers) in negotiating the price, the delivery time and the like.

In the assistance operation for the order, there is performed processing of receiving establishment information of an order recipient from the product manufacturer (set manufacturer) and generating an order form on the basis of the bidding matter information generated in the aforementioned assistance for the purchase request S1 and the quotation results representing the price and/or the delivery time which they have agreed on in the aforementioned assistance for the quotation. Then, there is performed processing of reporting information of the generated order form mentioned above and information of the manufacturing instruction generated in the aforementioned assistance for the purchase request to the parts manufacturer (processor).

In the assistance operation for the delivery, the parts are delivered to the product manufacturer (set manufacturer) from the parts manufacturer (processor), and there is performed processing of generating, when delivery acknowledgement notification is received from the product manufacturer (set manufacturer), a receipt and an acceptance inspection statement for the parts and reporting them to the parts manufacturer (processor).

In the assistance operation for the payment, there is performed processing of calculating, when payment notification is received from the aforementioned product manufacturer (set manufacturer), a commission, and in addition, generating a sales statement to make a bank transfer for the charge to the parts manufacturer (processor).

### (II) Unified Registration and Management of Information According to Order Placement and Grouping of Ordered Parts

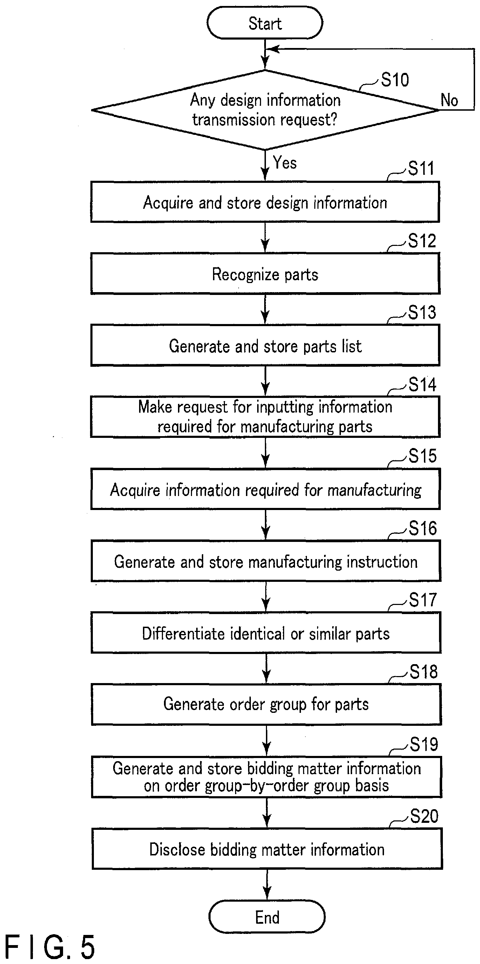

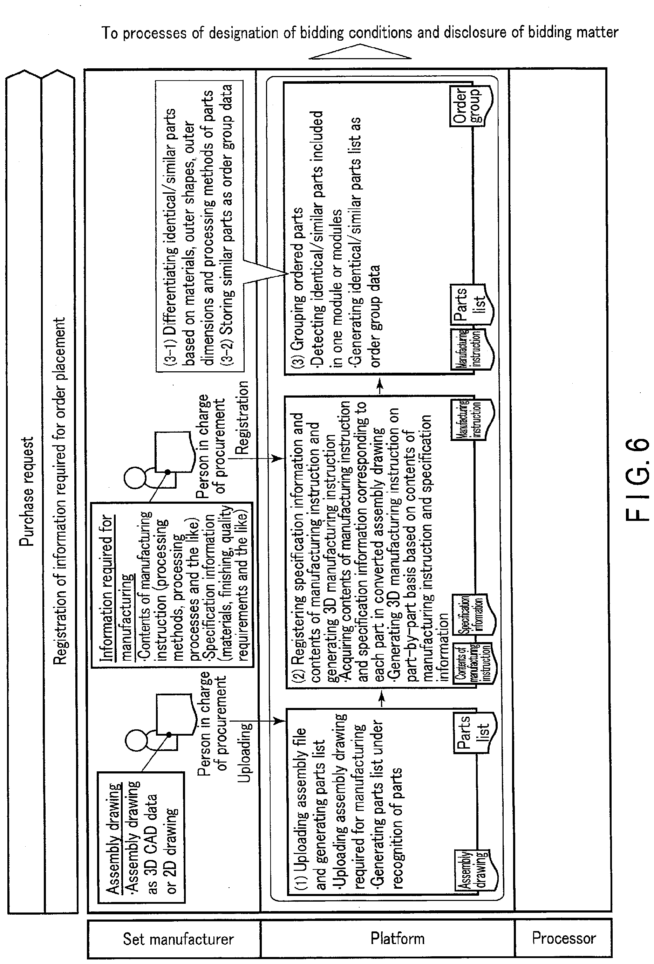

FIG. 5 is a flowchart showing processing procedures and processing contents of the assistance operation for the purchase request S1 by the server device SV, and FIG. 6 is a diagram showing exemplary operations from acquisition of the design information to grouping of the ordered parts in the aforementioned purchase request S1

### (1) Acquisition of Design Information and Generation of Parts List

At the product manufacturer (set manufacturer), a person in charge of design by way of example creates the assembly drawing of a product with a CAD system. While the assembly drawing is created, for example, as 3D data, it may be 2D data or both of those may be created. Moreover, at the product manufacturer (set manufacturer), the person in charge of design also generates information required for manufacturing the parts forming the aforementioned product. The information required for manufacturing is formed of information designating the contents of manufacturing instruction, and information designating specifications, for example. For the information designating the contents of manufacturing instruction, there are designated, for example, processing methods and processing processes. Moreover, for the information designating specifications, there are designated, for example, the material, the finishing level, the quality and the like.

At the product manufacturer (set manufacturer), when requesting order placement for the aforementioned designed parts forming the product, a person in charge of procurement by way of example first sends a transmission request for design information to the server device SV using the first terminal device MA1, and subsequently, transmits (uploads) data of the aforementioned assembly drawing along with attribute information of the product to the server device SV.

### (1-1) Acquisition of Design Information

In step S10, the server device SV is monitoring the aforementioned transmission request under the control of the design information acquisition unit 11. When the aforementioned transmission request comes from the first terminal device MA1 of the product manufacturer (set manufacturer) in this state, in step S11, the design information acquisition unit 11 receives the aforementioned design information and the attribute information of the product subsequently transmitted from the first terminal device MA1 via the communication interface 4, and stores the received design information, associating it with identification information (product manufacturer ID) of the product manufacturer as the requester and the identification information (product ID) of the product which are included in the attribute information simultaneously received, in the design information storage unit 31.

Notably, depending on the product manufacturer (set manufacturer), there is a case where it uses a different kind and/or version of application of the CAD system. Therefore, the server device SV preferably requests the product manufacturer (set manufacturer) to transmit the assembly drawing data in a form of intermediate file.

### (1-2) Generation of Parts List Information

Subsequently, the server device SV generates parts list information as follows on the basis of the aforementioned design information under the control of the parts list generating unit 12.

Namely, in step S12, the parts list generating unit 12 reads the design information from the aforementioned design information storage unit 31, and first, recognizes a solid shape for each component part, for example, using pattern matching on the basis of the data of the assembly drawing included in the design information. Then, the parts list generating unit 12 differentiates component parts on the basis of the recognized solid shapes mentioned above. Notably, when the assembly drawing data included in the design information is 2D CAD drawing data, the parts list generating unit 12 converts 2D CAD figure data into 3D CAD drawing data, and after that, performs the aforementioned recognition processing on the component parts.

Next, in step S13, the parts list generating unit 12 associates the differentiated component parts mentioned above with respective part IDs thereby to make a list of those, and associates information representing the listed parts list with the product ID to store it in the parts list storage unit 32.

### (2) Generation of Parts Manufacturing Instruction (2-1) Acquisition of Information Required for Manufacturing Parts

Next, in step S14, the server device SV transmits a request for requesting information required for manufacturing the individual component parts on the basis of the aforementioned parts list information stored in the parts list storage unit 32 to the first terminal device MA1 of the product manufacturer (set manufacturer) as the requestor from the communication interface 4 under the control of the parts manufacturing information acquisition unit 13.

Notably, while the parts manufacturing information acquisition unit 13 may transmit the request for all the component parts in this stage, when the 3D CAD drawing data by way of example acquired as the design information is supplemented with the manufacturing instruction information and the specification information, it may select parts that lack information required for manufacturing themselves and transmit the request only for the selected parts. For example, since there is occasionally a case where the 3D CAD drawing data is not supplemented with outer dimensions and the like of convex shapes, it selects such parts and transmits the request for those.

In response to this, a person in charge of procurement by way of example of the product manufacturer (set manufacturer) transmits the information required for manufacturing the individual component parts, for example, information indicating the contents of manufacturing instruction designating the processing methods and the processing processes and the specification information designating the materials and the required finishing levels and quality from the first terminal device MA1 in response to the aforementioned request.

Under the control of the parts manufacturing information acquisition unit 13, in step S15, the server device SV receives the information indicating the contents of manufacturing instruction for the parts and the specification information which are transmitted from the aforementioned first terminal device MA1 via the communication interface 4, and associates the information indicating the contents of manufacturing instruction for the parts and the specification information which are thus received with the individual part IDs to store those temporarily in the parts manufacturing information storage unit 33.

### (2-2) Generation of Manufacturing Instruction for Parts

Subsequently, in step S16, the server device SV describes the information indicating the contents of manufacturing instruction and the specification information mentioned above which are thus acquired for each part, for example, in a manufacturing instruction format stored in the data storage unit 3 under the control of the manufacturing instruction generating unit 14. In addition, the server device SV generates for each part the manufacturing instruction information by attaching a file of its 3D image (along with its 2D image as needed) and further adding data indicating points to be considered according to processing. Then, the manufacturing instruction generating unit 14 associates the generated manufacturing instruction information mentioned above with the product ID to store it in the manufacturing instruction storage unit 34.

The manufacturing instruction information includes, for example, data respectively indicating the part name, the part number, the part quantity, the material, the outer dimensions, the geometrical tolerance, the hole standards, the bending angle tolerance, the processing method, the processing process, the 2D image data, the 3D image data, and data indicating the quality requirements and the points to be considered regarding processing.

### (3) Grouping of Ordered Parts

### (3-1) Differentiation of Parts

Next, in step S17, for all the parts forming the product, the server device SV determines whether or not there are any parts that are the same or similar within a predetermined range in the material, the outer shape, the outer dimensions and the processing method on the basis of the aforementioned manufacturing instruction information stored in the manufacturing instruction storage unit 34 under the control of the order grouping unit 15.

### (3-2) Generation of Order Placement Group

Subsequently, in step S18, based on the results of the aforementioned determination, the order grouping unit 15 groups all the parts forming the product mentioned above into sets of ones that are the same or similar within a predetermined range in the material, the outer shape, the outer dimensions and the processing method. Then, the order grouping unit 15 sets each grouped parts group to an order group for the parts to store it, attaching a group ID thereto, in the order group information storage unit 35.

Notably, when the product includes a plurality of modules, the ordered parts may be grouped with all the parts forming these modules being as targets or may be grouped on a module-by-module basis.

### (III) Generation and Disclosure of Bidding Matter Information

In step S19, the server device SV generates the bidding matter information of the parts on the order group-by-order group basis on the basis of the aforementioned group information of the ordered parts stored in the order group information storage unit 35 under the control of the bidding matter information generating unit 16. The bidding matter information is generated by extracting information to be disclosed to the parts manufacturers, for example, from the aforementioned manufacturing instruction information stored in the manufacturing instruction storage unit 34 and combining the extracted information with information required for order placement. It includes, for example, items of information representing the part name, the parts grouping, the processing method, the material, the desired quantity, the desired manufacturing charge, the desired delivery time, the bidding essential conditions and the bidding desired conditions. Among these, the information required for order placement includes, for example, the delivery time, the estimated price and a disclosure period and is provided by the person in charge of procurement of the product manufacturer (set manufacturer).

Subsequently, in step S20, the server device SV sets the aforementioned bidding matter information for each order group stored in the bidding matter information storage unit 36 to the disclosable state in response to a browsing request of each parts manufacturer under the control of the bidding matter information disclosing unit 17. Then, upon receipt of the browsing request from the relevant one of the second terminal devices MB1 to MBm for the parts manufacturer in this state, the bidding matter information disclosing unit 17 reads the bidding matter information that is designated by the aforementioned browsing request from the bidding matter information storage unit 36 and downloads it to the second terminal device as the requestor from the communication interface 4.

Notably, in the aforementioned generation and disclosure of the bidding matter information, the parts manufacturers (processors) as disclosure targets may be restricted but they do not have to be restricted. Such restriction can be realized by, for example, beforehand acquiring the company information and the manufacturing resource information from each of the parts manufacturers (processors) as order placement candidates, and based on the acquired company information and manufacturing resource information, setting conditions regarding order placement to add these conditions to the bidding matter information.

### (Functions and Effects)

As mentioned above, according to the embodiment, in the server device SV, the component parts are recognized from the assembly drawing of the product included in the design information sent from the product manufacturer (set manufacturer) to make the parts list, further based on this parts list, the product manufacturer is requested to provide the contents of instruction required for manufacturing the component parts and the specification information, and these are acquired to generate the manufacturing instruction. Namely, the server device SV automatically generates the parts list and the manufacturing instruction of the parts. Therefore, the product manufacturer does not need to generate the parts list information or the manufacturing instruction information, which can significantly reduce a load regarding the parts procurement operation.

Furthermore, according to the embodiment, based on the generated manufacturing instruction, the component parts are classified into sets of ones that are the same or similar within a predetermined range in conditions of the material, the outer shape and dimensions, and the processing method to make respective order groups, and the bidding matter information is disclosed on the order group-by-order group basis. Accordingly, order placement processing of the parts forming the product can be performed for each group of the parts that are the same or similar within a predetermined range in conditions of the material, the outer shape and dimensions, and the processing method, which can make the parts order placement operation more efficient and the manufacturing quality of the parts more uniform, for example, as compared with the case of order placement for each part.

### <Other Embodiments>

(1) While for the embodiment, there is exemplarily presented a case where for each product, its component parts are grouped, when the manufacturing instruction storage unit 34 stores items of manufacturing instruction information regarding a plurality of products of different types, the grouping may be performed based on the aforementioned items of manufacturing instruction information regarding the products with all the component parts of the products being as targets.
   By doing so, working efficiency regarding parts order placement can be enhanced more than in the case of performing parts order placement processing for each product, which can reduce costs and make processing quality uniform.
(2) The conditions in grouping of the ordered parts are not limited to the material, the outer dimensions and the processing method of the parts but may only be the material and the processing method, and moreover, perfect matching in these conditions is not necessary but the similar parts matching within a preset range may be grouped.
(3) In addition, there can also be modified and implemented in various modes without departing from the spirit of the present invention the configuration and the installation place of the manufacturing ordering assistance apparatus, and the processing contents and the processing procedures of the acquisition processing of the design information of the product and the information required for manufacturing the parts, the generation processing of the parts list and the manufacturing instruction information, and the grouping of the ordered parts.

Embodiments of the present invention have been described in detail as above, and the description above is merely illustration of the present invention in all respects. It is needless to say that they may be improved or modified in various manners without departing from the scope of the present invention. In other words, a specific configuration in accordance with an embodiment may be properly employed in implementing the present invention.

In short, the present invention is not limited to the embodiments above as it is but can be embodied by modifying components of those in its implementation phase without departing from its spirit. Moreover, various inventions may be formed by properly combining a plurality of components disclosed in the embodiments above. For example, some components may be eliminated from all the components shown for the embodiments. Furthermore, components of different embodiments may be properly combined.

### REFERENCE SIGNS LIST

- SV: Server device
- MA1 to MAn: First terminal device of product manufacturers
- MB1 to MBm: Second terminal device of parts manufacturers
- NW: Network
- 1: Control unit
- 2: Program storage unit
- 3: Data storage unit
- 4: Communication interface (communication I/F)
- 5: Bus
- 11: Design information acquisition unit
- 12: Parts list generating unit
- 13: Parts manufacturing information acquisition unit
- 14: Manufacturing instruction generating unit
- 15: Order grouping unit
- 16: Bidding matter information generating unit
- 17: Bidding matter information disclosing unit
- 31: Design information storage unit
- 32: Parts list storage unit
- 33: Parts manufacturing information storage unit
- 34: Manufacturing instruction storage unit
- 35: Order group information storage unit
- 36: Bidding matter information storage unit

## Claims

1. A manufacturing ordering assistance apparatus that enables data transmission with a terminal device used by a product manufacturer via a network, the apparatus comprising:
a first acquisition unit that acquires design information of a product from the terminal device;
a parts list generating unit that recognizes a plurality of parts forming the product from the acquired design information and generates parts list information representing the recognized parts;
a second acquisition unit that acquires information required for manufacturing the recognized parts from the terminal device, based on the generated parts list information;
a manufacturing instruction generating unit that generates manufacturing instruction information at least including the acquired information required for the manufacturing, in accordance with a beforehand prepared format; and
a classification unit that classifies the recognized parts into a plurality of order groups in each of which a condition regarding the manufacturing is common within a predetermined range, based on the generated manufacturing instruction information.

2. The manufacturing ordering assistance apparatus according to claim 1, wherein when the product is formed of a plurality of modules, with a set of a plurality of parts forming the individual modules being as a target, the classification unit classifies the parts included in the set into a plurality of order groups in each of which the condition regarding the manufacturing is common within the predetermined range.

3. The manufacturing ordering assistance apparatus according to claim 1, wherein based on the manufacturing instruction information generated for each of a plurality of products of different types, with a set of a plurality of parts forming the individual products of different types being as a target, the classification unit classifies the parts included in the set into a plurality of order groups in each of which the condition regarding the manufacturing is common within the predetermined range.

4. The manufacturing ordering assistance apparatus according to any of claims 1 to 3, wherein the classification unit classifies the parts into a plurality of order groups in each of which at least one of a material, an outer shape, an outer dimension and a processing method of the parts is common within the predetermined range.

5. A manufacturing ordering assistance method executed by an information processing apparatus that enables data transmission with a terminal device used by a product manufacturer via a network, the method comprising:
acquiring design information of a product from the terminal device;
recognizing a plurality of parts forming the product from the acquired design information and generating parts list information indicating the recognized parts;
acquiring information required for manufacturing the recognized parts from the terminal device, based on the generated parts list information;
generating manufacturing instruction information at least including the acquired information required for the manufacturing, in accordance with a beforehand prepared format; and
classifying the recognized parts into a plurality of order groups in each of which a condition regarding the manufacturing is common within a predetermined range, based on the generated manufacturing instruction information.

6. A program for causing a hardware processor included in the manufacturing ordering assistance apparatus according to any of claims 1 to 4 to execute pieces of processing of the respective units included in the manufacturing ordering assistance apparatus.
